# EUROPEAN PATENT APPLICATION

(11) **EP 3 461 161 A1**
(43) Date of publication of application: **27.03.2019**
(21) Application number: 18195785.3
(22) Date of filing: 20.09.2018
(51) Int. Cl.: H04W 8/18, H04W 8/20, H04W 48/14

(54) **METHOD OF ASSOCIATING CONFIGURATION SETTINGS WITH DEVICES IN A NETWORK AND CORRESPONDING APPARATUS**

(30) Priority: 26.09.2017 EP 17306262
(71) Applicant: InterDigital CE Patent Holdings, 75017 Paris (FR)
(72) Inventor: LE MERRER, Erwan, 35576 Cesson-Sévigné Cedex (FR); FONTAINE, Patrick, 35576 Cesson-Sévigné Cedex (FR)
(74) Representative: Huchet, Anne

(57) **Abstract**

In an access point, data communication of network devices between the network devices and a wide area network or between the network devices is monitored. Change points are detected in the monitored data. If a change point coincides with a removal/addition of a network device, configuration settings on the gateway for a network device may be automatically changed, transferred to another network device and/or reset to a default, possibly more restrictive configuration. Network management and data protection are facilitated and improved.

## Description

### FIELD

The present disclosure generally relates to the field of associating configuration settings with devices connected in a network.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

In network environments such as home, household, residence or small business, devices such as Set Top Boxes (STB), High-Definition Televisions (HDTV) and mobile communication devices (portable PCs, mobile phones, tablets) connect to an Internet Service Provider (ISP) located in a Wide Area Network (WAN) through a Local Area Network (LAN) controlled by one or more Access Points (APs) or GateWays (GWs). An access point or gateway offers wireless and wired communication for connecting the Local Area Network (LAN) devices, e.g., Ethernet and WiFi (a trademark of the Wi-Fi Alliance, a technology for wireless LAN based on IEEE 802.11 standards). Some devices have a relative long lifetime such as the above mentioned Set Top Boxes and High-Definition Televisions, while other devices such as the previous mentioned mobile communication devices are changed on a recurring basis. When a device is added to or removed from the local network, a user, typically having network administrative rights, will have to intervene and modify gateway settings and preferences for the added/removed device manually. When devices are added/removed relatively frequently to/from the local network, this task becomes too time-consuming. Then, configuration may be skipped, resulting in undesired and inefficient operation of the home network devices and possibly persistence or introduction of security flaws. There is thus a need for optimization of this reconfiguration task.

### SUMMARY

According to one aspect of the present disclosure, there is provided a method of associating configuration settings with network devices. The method is implemented by an access point providing network access (i.e., to a WAN, to other network devices via the LAN) to the network devices. The method includes monitoring, per (LAN) network device connected to the access point, data communication transiting through the access point (e.g., from the network device to the WAN and vice versa, or from the network device to another network device in the LAN) and detecting an addition of a "new" or "second" network device ("new" or "second" meaning yet unknown to the access point, i.e., of which the access point has no record in memory). The method further includes, when the addition of the second network device is coincidental with a change point detected in the monitored data communication for an "old" or "first" network device ("old" and "first" meaning known to the access point, i.e. of which the access point has a record in memory) and the second network device has data communication that is correlative to data communication of the first network device from before the detected change, associating configuration settings associated with the first network device, to the second network device.

According to a further aspect of the method of associating configuration settings with network devices, the monitoring of the data communication per network device comprises monitoring data communication per network device with a Wide Area Network connected to the access point.

According to a further aspect of the method of associating configuration settings with network devices, the monitoring of the data communication comprises monitoring Domain Name System queries per network device.

According to a further aspect of the method of associating configuration settings with network devices, the monitoring of the data communication per network device comprises monitoring of port numbers opened per network device.

According to a further aspect of the method of associating configuration settings with network devices, the monitoring of the data communication per network device comprises monitoring of bandwidth use per network device. The term 'bandwidth' being related to bit rate of incoming/outgoing data communication, for example peak or average upload or download bit rate.

The present principles also relate to an access point device including a processor, a memory, a first network interface and a second network interface. The processor, the memory, the first and the second network interfaces are configured to monitor, per network device connected to the access point device, data communication transiting through the access point, and detect an addition of a second (unknown, new) network device (i.e., detect a connection of a network device to the access point that is yet unknown to the access point). When the addition of the second network device is coincidental with a change point detected in the monitored data communication of the first network device and the second network device has data communication that is correlative to data communication of the first network device from before the detected change point, the processor, a memory, the first network interface and the second network interface are further configured to associate, with the second network device, configuration settings associated with the first network device, and to associate, with the first network device, default configuration settings.

According to a further aspect of the access point device, the processor, the memory, the first and the second network interfaces are further configured to store the configuration settings.

According to a further aspect of the access point device, the access point device is a gateway.

According to a further aspect of the access point device, the second network device is a Set Top Box.

According to a further aspect of the access point device, the second network device is a mobile communication device.

According to a further aspect of the access point device, the mobile communication device is a smartphone.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figure 1** is an exemplary network environment in which the present principles can be applied.
**Figure 2** is a flow chart of an embodiment of a method for associating configuration settings with network devices per some principles of the present disclosure.
**Figure 3** is an embodiment of an access point or a gateway **104** suitable for implementing the method per the principles of the present disclosure.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

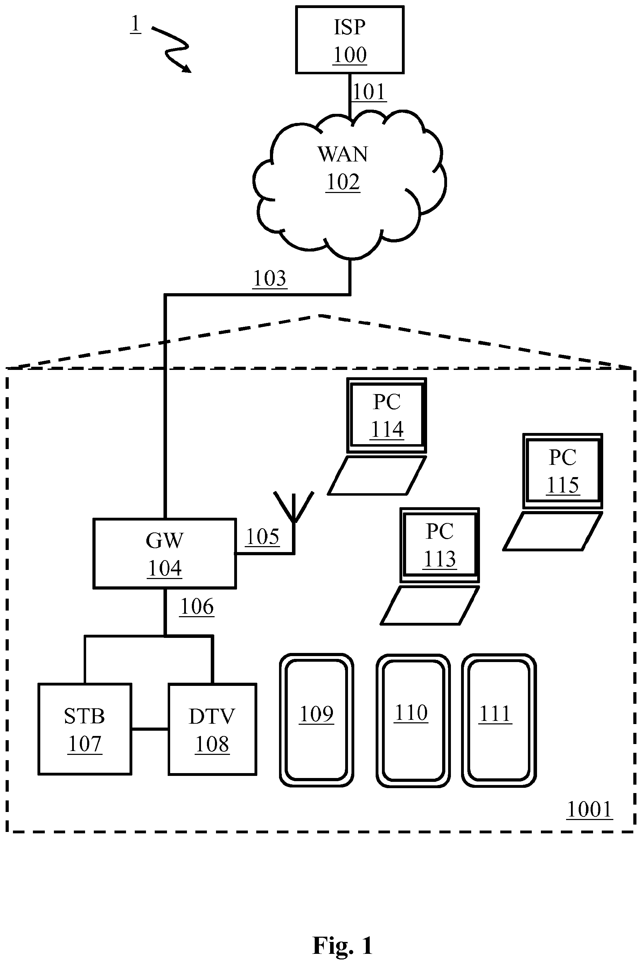

**Figure 1** is an exemplary network environment network environment for application of the present principles. The system **1** includes an Internet Service Provider server ISP **100**. ISP **100** is connected to a Wide Area Network WAN **102** via connection **101**, and via connection **103** to a plurality of subscriber locations such as subscriber premises (home, office) **1001**. Subscriber premises **1001** includes an access point or gateway GW **104**. Gateway **104** is an Access Point for wired and wireless devices in the local network: Set Top Box STB **107**, Digital Television DTV **108**, Personal Computer PC **113-115**, and mobile devices **109-111**. Gateway **104** is provided to the subscriber in the context of a triple-play service offer from ISP **100** for combined Internet, telephony and IPTV services. Gateway **104** includes several network interfaces, a first network interface (not shown) enabling connection **103** with WAN **102**, a second network interface (not shown) enabling wired connection in the wired part of the LAN network **106** with LAN devices **107** and **108**, and a third network interface (not shown) enabling wireless connections via an antenna **105** with mobile devices PCs **113-115** and with smartphones **109-111**. The figure represents for example a four-person family household, or a small business environment. A valid scenario in this context is the replacement of a mobile device by another, by one of the members of the family or one of the employees of the business environment. For example, one of the parents, previously using smartphone **109**, has bought a new smartphone **112** (not shown). While the new smartphone is added to the local network, smartphone **109** is handed over to one of the children. There are now four smartphones, with smartphone **109**, previously used by one of the parents, is now used by one of the children. One of the parents, having administrator privileges, will have to change configuration settings stored in the gateway **104** which are associated with the 'old' telephone, including parental control parameters, and will have to create new configuration settings associated with the new telephone. Typically, the parent can do so by opening an Internet browser application and connect to the gateway (for example, via the much-used default gateway IP address 192.168.1.1). The gateway includes a web server which will then provide a web page enabling the parent to login as a local network administrator. The web server presents a web page allowing to create or configuration settings per local network device. The similar scenario can be considered in the above mentioned business environment, where local network devices are frequently changed hands, removed and added to the local network. It is the task of one of the employees having local network administrator privileges (e.g., supervisor, business owner, or Information Technology (IT) management employee), to ensure that network security such as access preferences, firewall settings, open ports etc. are correctly managed for each local network device to avoid security flaws and information leakage which may harm business.

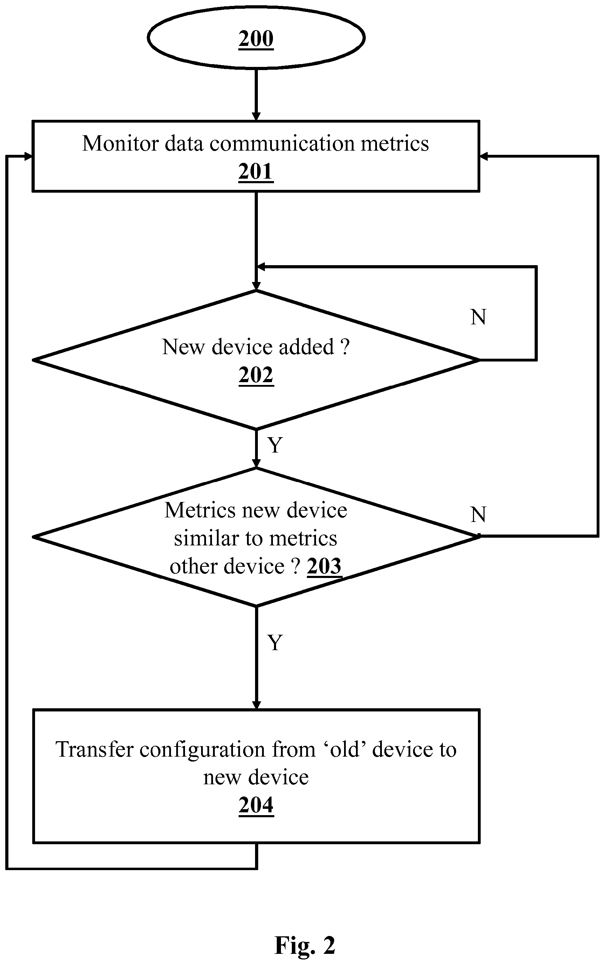

**Figure 2** is a flow chart of an embodiment of a method **200** for associating configuration settings with network devices per some principles of the present disclosure. In a first step **201**, gateway **104** monitors data communication transiting through the gateway from/to devices in the local network connected to it. This monitoring is for example achieved through packet inspection. Network devices are identified, for example, by their unique Media Access Control (MAC) address. The monitored data communication is for example Internet traffic between a network device and WAN **102**, or data communication between one LAN network device and another LAN network device, both connected to the gateway. This data communication is monitored during time slots and memorized (stored) as a time series (histogram). If there is Internet traffic for a network device within a time slot, the monitored network device is marked as active for that time slot; if not, the monitored network device is marked as inactive during the time slot. Time slots can have any duration for example from 5 minutes to 1 hour or even one day. Several types of time slots can be defined that are distinguished by different time slot durations. Several types of timeslots can overlap. For example, a first time slot duration of one hour gives per-hour activity, while a second time slot duration of one day gives a daily activity. From the recording of data communication through the first time slots, activity periods per hour in a day may be determined. From a recording of data communication through the second time slots, activity periods per day in a week may be determined. The gateway thus obtains per monitored network device a time series for a given data communication metric measured through time slots of a given duration.

Other data communication than Internet activity can be measured per network device such as (peak, average) data communication incoming/outgoing (download/upload) bandwidth (bit rate) usage, data communication volume, distribution of data communication over time, connectivity over time (e.g., time distribution of connections to the WiFi network). But also data communication such as traffic classification based on inspection of packet contents: source address, port, destination address, inferring application type used by looking for application-specific data within TCP or UDP payloads, Quality of Service (QoS) of data communication, Domain Name System (DNS) queries to some categories of websites, port numbers used by applications running on the monitored network devices (e.g., port 21 indicates use of a File Transfer Protocol (FTP) application), class of Internet traffic e.g. latency critical Internet traffic class indicates gaming activity, Voice over IP (VoIP), video conferencing, IP television (IPTV), while non-latency critical Internet traffic indicates for example Internet browsing or file download.

Once the monitoring data (the time series data) is obtained, a change point detection algorithm is applied. Its purpose is to detect whether a change has occurred in the time series data, when, and the kind of change. For instance, from a change occurring in a time series it can be determined that before the change point, the monitored network device was mainly used during office hours, while after the change point, the monitored network device was mainly used during evening hours.

Once a change point has been detected for a monitored network device, an action is applied such as resetting the gateway's configuration settings to default for the monitored network device for which the change point was detected, or associate the gateway's configuration settings for the that network device with another network device, or transfer the gateway's configuration settings for that network device to the another network device. At least two cases can be identified:
(1) a change point is detected for a network device and no "new" device was added to the local network (i.e., a yet "unknown" network device (i.e., unknown to the gateway) connects to the gateway) in a time frame surrounding the occurrence of the change point (in other words, that is coincidental with the occurrence of the (detected) change point). It can be concluded that the network device changed hands and was not replaced.
(2) a change point is detected for a network device and a "new" network device was added to the local network in a time frame surrounding (including) the occurrence of the change point (i.e., the moment (time) of addition of the new network device is said to be coincident (coincidental) with a moment (time) of a detected change point), and the new network device has data communication which is the same as or similar to (are correlative) data communication of the network device for which the change point was detected (reference **203** in Figure 2). A time frame has a duration of a single data communication monitoring time slot or spans several data communication time slots (e.g., 1, 10 or 100 time slots), or has an absolute duration (e.g., 1, 10 or 100 (milli-) seconds).

According to a particular embodiment, to determine correlation or similarity, a correlation function or similarity function can be applied between two time series, here time series (histogram data) of data communication of the "new" network device and time series of data communication of the network device for which the change point was detected. If the outcome of the function is higher than a given threshold, there is correlation or similarity. Correlation / similarity can also be determined using a distance function; if the outcome of the distance function applied to the above time series of data communication is lower than a given threshold, the time series are considered to be similar or correlated. If correlation / similarity is detected, it can then be concluded that the network device for which the change point was detected changed hands and was replaced by the "new" network device.

For case (1), the gateway's configuration settings for the network device for which the change point is detected are reset to a default configuration (reinitialized) for improved network security and data protection.

For case (2), the gateway's configuration settings for the network device for which the change point is detected (i.e., "old" network device) are associated with or are transferred to the "new" device (reference **204** in Figure 2). Further for case (2) and according to a particular embodiment, in addition to the associating/transfer of the configuration settings with/to the "new" network device, the gateway's configuration settings associated with the device for which the change point is detected are reset to a default configuration for improved network security and data protection.

According to an embodiment the discussed configuration settings reside in the gateway, for example in a table or in a database stored in a memory, the table/database entries associating configuration settings with a device. According to different embodiment, the configuration settings may reside in a memory/in a database in the network device, according to the type of configuration settings and the implementation used. According to yet another embodiment, the configuration settings may reside both in the gateway and in the network device.

According to a particular embodiment, the configuration settings include parental control settings.

According to a particular embodiment, the default configuration includes low permissive parental control settings.

According to a particular embodiment, the configuration settings include firewall configuration settings, i.e., more or less permissive.

According to a particular embodiment, resetting the gateway's configuration settings for a network device includes reinitializing to a default configuration of the firewall settings for the device, e.g., to a default, restrictive setting.

According to a particular embodiment wherein configuration settings are memorized (stored) in the gateway per local network device MAC address (e.g., in memory **1043** of gateway **104**), for case (1) the configuration settings for the MAC address of the device for which the change point is detected are reset to default configuration settings with restricted access; while for case (2), in the configuration settings stored in the gateway, the MAC address associated with the device for which the change point is detected is replaced by the MAC address of the new device, while a new default configuration setting is created for the MAC address of the device for which the change point is detected.

According to a particular embodiment, before applying configuration setting changes, the registered local network administrator is informed of the imminent configuration setting change. The registered local network administrator can then refuse or accept the configuration setting change. The registered local network administrator can be informed for example by transmission of an e-mail or short message service.

According to the present principles, the gateway's configuration settings for local network devices are thus automatically adapted according to device usage and requires no complex user intervention. Security is improved (security flaws are reduced) when these gateway's configuration settings include security settings such as firewall configuration.

According to a particular embodiment, the present principles are part of a firewall in a gateway/access point.

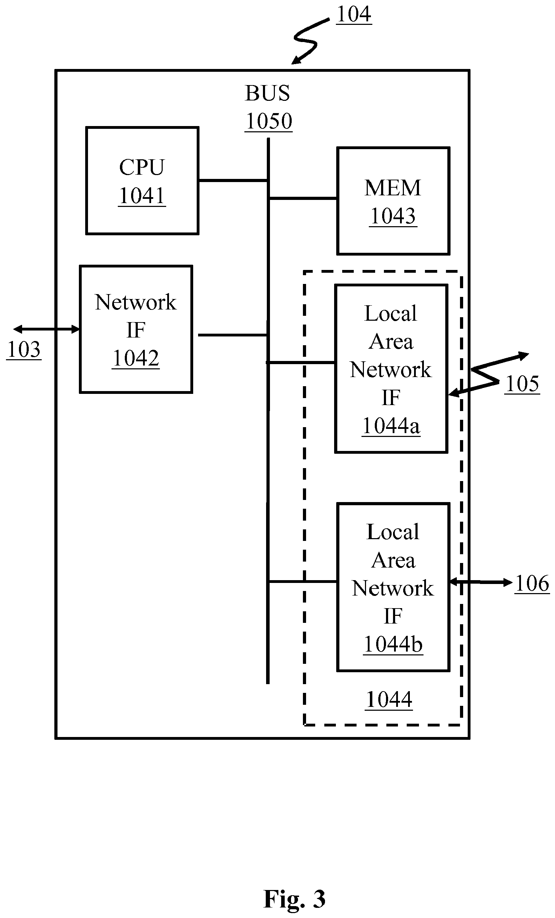

**Figure 3** is an embodiment of an access point or a gateway **104** suitable for implementing the method per the principles of the present disclosure. The device **104** includes a processor or central processing unit (CPU) **1041**, a memory **1043**, a network interface **1042** for connection of the access point (gateway) to a WAN **102** via communication link **103**, and a network interface **1044** for connection to LAN devices e.g., **107-111** and **113-115.** Network interface **1044** is split into two network interfaces **1044a** and **1044b**, for respectively wired communication and wireless communication with the LAN devices. Processor **1041**, memory **1043**, first **1042** and second **1044** network interface are configured to monitor, per network device, data communication transiting through the gateway, and to detect an addition (detect a connection to the gateway) of a "new" (unknown, second) local network device. When the addition of the new network device is coincidental with a change point detected in the monitored data communication for an "old" (known, first) network device and the new network device has data communication that is correlative to data communication of the old network device from before the detected change point, processor **1041**, memory **1043**, first **1042** and second **1044** network interface are further configured to associate or to transfer configuration settings associated with said network device for which the change point was detected, with/to the new network device.

It is to be appreciated that some elements in the drawings may not be used or be necessary in all embodiments. Some operations may be executed in parallel. Embodiments other than those illustrated and/or described are possible. For example, a device implementing the present principles may include a mix of hard- and software.

It is to be appreciated that aspects of the principles of the present disclosure can be embodied as a system, method or computer readable medium. Accordingly, aspects of the principles of the present disclosure can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the principles of the present disclosure can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method (200) of associating configuration settings with network devices, said method being implemented by an access point (104) providing network access to said network devices via a network provided by the access point, said method comprising:
monitoring (201), per network device connected to said access point, data communication transiting through said access point;
detecting (202) an addition of a second network device to said network;
when (203) said addition of said second network device is coincidental with a change point detected in said monitored data communication for a first network device and said second network device has data communication that is correlative to data communication of said first network device before the detected change point, associating (204), with said second network device, configuration settings associated with said first network device, and associating, with the first network device, default configuration settings.

2. The method according to claim 1, wherein said monitoring per network device of said data communication comprises monitoring data communication per network device with a Wide Area Network connected to said access point.

3. The method according to claim 1 or 2, wherein said monitoring per network device of said data communication comprises monitoring Domain Name System queries per network device.

4. The method according to any of claims 1 to 3, wherein said monitoring per network device of said data communication comprises monitoring of port numbers opened per network device.

5. The method according to any of claims 1 to 4, wherein said monitoring per network device of said data communication comprises monitoring of bandwidth use per network device.

6. An access point device (104), the access point device comprising a processor (1041), a memory (1043), a first network interface (1042) and a second network interface (1044), configured to:
monitor, per network device connected to said access point device, data communication transiting through said access point;
detect an addition of a second network device to said network;
when said addition of the second network device is coincidental with a change point detected in said monitored data communication for a first network device and said second network device has data communication that is correlative to data communication of said first network device before the detected change point:
associate, with said second network device, configuration settings associated with said first network device; and
associate, with the first network device, default configuration settings.

7. The access point device according to claim 6, wherein said memory is configured to store said configuration settings.

8. The access point device according to claim 6 or 7, wherein said access point device is a gateway.

9. The access point device according to any of claims 6 to 8, wherein said second network device is a Set Top Box.

10. The access point device according to any of claims 6 to 8, wherein said second network device is a mobile communication device.

11. The access point device according to claim 10, wherein said mobile communication device is a smartphone.
